# EUROPEAN PATENT SPECIFICATION

(11) **EP 0 605 843 B1**
(45) Date of publication and mention of the grant of the patent: **24.03.1999**
(21) Application number: 93120664.3
(22) Date of filing: 22.12.1993
(51) Int. Cl.: C08K 5/09, C08J 3/24, C08L 31/04, C08L 23/08

(54) **Improved EVA vulcanizates**
Verbesserte EVA-Vulkanisate
Vulcanisats améliorés d'EVA

(30) Priority: 04.01.1993 US 56
(43) Date of publication of application: 13.07.1994
(73) Proprietor: Bayer Inc., Sarnia, ON N7T 7M2 (CA)
(72) Inventor: Brown, Trevor Alan, Ontario N7V 2E5 (CA)
(74) Representative: Steiling, Lothar, Dr.

(56) References cited:
- CH-A- 471 168
- GB-A- 2 205 105
- JP-A- 6 179 475
- US-A- 4 857 571
- DATABASE WPI Week 9030, Derwent Publications Ltd., London, GB; AN 90-229158 & JP-A-2 158 640 (FUJIKURA) 19 June 1990

## Description

### FIELD OF INVENTION

This invention relates to a process for the vulcanization of a mixture of ethylene-vinyl acetate polymer and ethylene-propylene-non-conjugated diene polymer using an organic peroxide as vulcanization agent and zinc di-acrylate as a reinforcing agent.

### BACKGROUND OF THE INVENTION

Ethylene-vinyl acetate polymers are well known and the vulcanization of such polymers with organic peroxides is also well known. The use of zinc dimethacrylates as a curable additive to improve the properties of vulcanizates is taught in U.S. Patents 4 713 409, 4 857 571 and 4 983 678 but none of these patents teach the use of zinc di-methacrylate with ethylene-vinyl acetate polymers. Derwent patent abstracts (1986) of published Japanese patent applications J61 079 475A and J61 079 476A describe the use of a polyfunctional acrylic ester (compounds having acryloyloxy groups such as the reaction products of ethylene glycol diacrylate with (meth)acrylic acid or zinc dimethacrylate) as a crosslinking and blowing agent in ethylene-vinyl acetate polymers.

US-A-4 857 571 describes curable elastomer compositions comprising elastomers such as EVA, EPDM and mixtures thereof.

### SUMMARY OF THE INVENTION

The present invention is directed to a process for the vulcanization of from 10 to 50 parts by weight of ethylene-propylene-non-conjugated diene polymer combined with from 50 to 90 parts by weight of ethylene-vinyl acetate polymer to provide 100 parts by weight of polymer wherein 100 parts by weight of said polymer is mixed with 0 to 60 parts by weight of reinforcing filler, with from 0 to 15 parts by weight of zinc oxide, with from 1 to 10 parts by weight of organic peroxide and with from 5 to 35 parts by weight of zinc di-acrylate, and the mixture is heated for from 10 to 60 minutes at from 150° to 180°C to produce the vulcanizate.

### DETAILED DESCRIPTION OF THE INVENTION

Ethylene-vinyl acetate rubbery polymers are well known. The ethylene-vinyl acetate polymers useful in the present invention are those which contain from 35 to 85 weight percent of vinyl acetate, preferably from 40 to 60 weight percent of vinyl acetate, the balance being ethylene. Such polymers have molecular weights, expressed as the Mooney viscosity (ML 1+4 at 100°C), of 12 to 35, have densities of about 1 g/cm³ and may have melt flow indices at 190°C of 1 to 5 g per 10 min. The rubbery polymer when compounded with carbon black and vulcanized has good heat resistance, ozone resistance and weathering capability.

In the process of the present invention, the rubbery polymer is mixed with the other components by conventional means - that is on a rubber mill or in an internal mixer. The organic peroxide is added last and usually on a cold rubber mill. The rubbery polymer is a mixture of from 50 to 90, preferably from 60 to 80, parts by weight of ethylene-vinyl acetate rubbery polymer and from 10 to 50, preferably from 20 to 40, parts by weight of an ethylene-propylene-non-conjugated diene polymer, for a total of 100 parts by weight of polymer. The ethylene-vinyl acetate polymer contains from 35 to 85, preferably from 40 to 60, weight percent of vinyl acetate, the balance being ethylene. Such polymers generally have Mooney viscosities (ML 1+4 at 100°C) of from 12 to 35, preferably from 15 to 30. The ethylene-propylene-non-conjugated diene polymer generally contains from 45 to 67 weight percent of ethylene and from 2 to 6 weight percent of non-conjugated diene, the balance being propylene. A preferred non-conjugated diene is ethylidene norbornene. These polymers generally have Mooney viscosities (ML 1+8 at 100°C) of from 30 to 75 and for ease of mixing with the ethylene-vinyl acetate polymers preferably have. Mooney viscosities of from 30 to 50.

The polymer is mixed with a reinforcing filler which is preferably carbon black, the amount of filler being from 0 to 60, preferably from 25 to 45, parts by weight per 100 parts by weight of polymer. Zinc oxide is mixed with the polymer in an amount of from 0 to 15, preferably from 5 to 12, parts by weight per 100 parts by weight of polymer. Zinc di-acrylate is also mixed with the polymer in an amount of from 5 to 35, preferably from 15 to 25, parts by weight per 100 parts by weight of polymer. The organic peroxide is added last to the mixture in an amount of from 1 to 10, preferably from 4 to 7, parts by weight per 100 parts by weight of polymer. Suitable organic peroxides include 1,1-di-tertbutyl peroxy-3,3,5-trimethyl cyclohexane, 4,4-di-tertbutyl peroxy n-butyl valerate, dicumyl peroxide, 2,5-dimethyl-2,5-di-tertbutyl peroxy hexane, tertbutyl cumyl peroxide and di-tert-butyl peroxide. Stabilizers or antioxidants may be incorporated during the compounding. Subsequent to forming and shaping, the compound is cured by heating at a temperature of from 150°C to 180°C for a time of from 10 to 60 minutes.

The vulcanizates so produced have good abrasion resistance, good heat resistance, good dynamic and low temperature properties and good strength properties. Such vulcanizates may be used in various types of belts including synchronous and serpentine automotive drive belts, seals, rubber covered rolls, hoses and CV boots.

The following examples exemplify the invention and are not intended to limit the scope thereof. All parts are parts by weight and all test procedures are ASTM procedures unless specified otherwise.

### Example

The compounds shown in Table 1 were prepared by mixing the components on a rubber mill. All parts are parts by weight. In Table 1, polychloroprene was Baypren® 53, HNBR was hydrogenated nitrile rubber Therban® 1767, EVA was ethylene-vinyl acetate polymer Levepren® 500HV, EPDM was an ethylene-propylene-ethylidene norbornene polymer POLYSAR® EPDM XH 013B, carbon black was that designated N762, diphenylamine cpd was Vulkanox® DDA, polymerized TDHQ was Vulkanox® HS, ZMB1 was Vulkanox® ZMB-2, peroxide was Vulcup® 40KE and TMTM was tetramethylthiuram monosulphide.

The Mooney viscosity of the compounds (ASTM D 1646) and the scorch time (ASTM D 1646) are recorded in Table 1. Samples were tested in a Monsanto rheometer (ASTM D 2084) operated at 160°C and the data are shown in Table 1.

The compounds were cured by heating at 160°C for minutes. Strength and other vulcanizate properties were determined, using standard ASTM procedures, and the results are recorded in Table 2. The vulcanizates were aged in air (ASTM D 573) and in oil (ASTM D 471) and the properties were determined, the results being shown in Table 3.

Expt. #1 was a control using polychloroprene. Expts. #2 and 3 were controls using ethylene-vinyl acetate as the polymer, #3 with no zinc di-acrylate present and #2 with zinc di-methacrylate present. Expt. #6 was a control using hydrogenated nitrile rubber. Expt. #4 is a comperative example without the addition of EPDM to ethylene-vinylacetate polymer. Expt. 5 is within the scope of the present invention and illustrates the use of ethylene-vinyl acetate polymer plus EPDM plus zinc di-acrylate. For Expt. #5, it is clear that a good balance is achieved of tensile strength, modulus and elongation and that these properties are retained well on aging.

Good low temperature flexibility is shown, with the presence of the EPDM causing a further improvement and the dynamic properties, as shown by Tan delta, are good especially when EPDM is also present. The improved properties attained when zinc di-acrylate is present are unexpected.

**TABLE 1**

| Expt. # | 1 | 2 | 3 | 4 | 5 | 6 |
|---|---|---|---|---|---|---|
| Polychloroprene | 100 | -- | -- | -- | -- | -- |
| HNBR | -- | -- | -- | -- | -- | 100 |
| EVA | -- | 100 | 100 | 100 | 60 | -- |
| EPDM | -- | -- | -- | -- | 40 | -- |
| Carbon Black | 55 | 35 | 55 | 35 | 35 | 35 |
| Zinc dimethacrylate | -- | 20 | -- | -- | -- | -- |
| Zinc di-acrylate | -- | -- | -- | 20 | 20 | 20 |
| Magnesium oxide | 4 | -- | -- | -- | -- | -- |
| Stearic acid | 2 | -- | -- | -- | -- | -- |
| Diphenylamine cpd | 4 | -- | -- | -- | -- | -- |
| Polymerized TDHQ | -- | 1 | 1 | 1 | | 1 |
| ZMB1 | -- | 1 | 1 | 1 | 1 | 1 |
| Zinc Oxide | 5 | 10 | 10 | 10 | 10 | 10 |
| Peroxide | -- | 6.5 | 6.5 | 6.5 | 6.5 | 6.5 |
| TMTM | 1 | -- | -- | -- | -- | -- |

| Compound Mooney (ML1+4 at 100°C) | | | | | | |
|---|---|---|---|---|---|---|
| | 81 | 28 | 37 | 27 | 43 | 78 |

| Mooney scorch at 120°C | | | | | | |
|---|---|---|---|---|---|---|
| t₅ (mins) | 10.4 | 19.5 | >30 | >30 | 27.4 | 12 |

| Monsanto rheometer 1°are, 100 cpm 160°C | | | | | | |
|---|---|---|---|---|---|---|
| MH (dN.m) | 19.9 | 10.8 | 8.5 | 28.2 | 42.4 | 39.2 |
| ML (dN:m) | 2.2 | 0.3 | 0.5 | 0.3 | 0.9 | 1.3 |
| MH-ML (dN.m) | 17.7 | 10.5 | 8.0 | 27.9 | 41.5 | 37.9 |
| t₅₀ (mins) | 3.3 | 9.9 | 10.9 | 5.4 | 3.4 | 4.8 |
| t₉₀ (mins) | 13.0 | 24.3 | 23.9 | 20.8 | 18.8 | 19.6 |

**TABLE 2**

| Expt. # | 1 | 2 | 3 | 4 | 5 | 6 |
|---|---|---|---|---|---|---|
| Tensile strength (MPa) | 20.2 | 14.3 | 14.5 | 20.3 | 18.6 | 27.8 |
| 50% modulus (Mpa) | 2.6 | 2.0 | 1.7 | 4.3 | 6.0 | 4.2 |
| 100% modulus (Mpa) | 5.2 | 3.9 | 4.3 | 10.7 | 13.5 | 11.4 |
| Elongation (%) | 335 | 380 | 255 | 170 | 135 | 205 |
| Tear-Die C (kNm) | 47.3 | 36.8 | 27.4 | 28 | 29.1 | 28.8 |
| Tear-Die B (kNm) | 83.2 | 75.2 | 64.7 | 64.7 | 64.6 | 77.6 |
| Hardness-Shore A | 73 | 75 | 71 | 80 | 83 | 78 |
| DIN Abrasion (mm³ loss) | 132 | 185 | 155 | 122 | 125 | 55 |
| Pico Abrasion (Index) | 1.27 | 1.11 | 0.87 | 3.62 | 3.26 | 9.43 |

| Gehman Low temperature flexibility (°C) | | | | | | |
|---|---|---|---|---|---|---|
| T₂ | -25 | 5 | 3 | -7 | -8 | -20 |
| T₅ | -31 | -11 | -9 | -20 | -21 | -24 |
| T₁₀ | -33 | -21 | -19 | -24 | -25 | -25 |
| T₁₀₀ | -38 | -30 | -29 | -35 | -40 | -31 |
| Brittle point | -33 | -30 | -39 | -34 | -50 | -55 |

| Tan delta (MERI100B, 8% static compression, ± 3% dynamic, 30 Hz | | | | | | |
|---|---|---|---|---|---|---|
| 30°C | 0.138 | 0.211 | 0.246 | 0.174 | 0.137 | 0.117 |
| 80°C | 0.106 | 0.211 | 0.231 | 0.121 | 0.092 | 0.087 |
| 120°C | 0.115 | 0.203 | 0.193 | 0.101 | 0.082 | 0.077 |
| 150°C | 0.113 | 0.186 | 0.165 | 0.091 | 0.073 | 0.069 |

| Measured at 150°C | | | | | | |
|---|---|---|---|---|---|---|
| Tensile strength (Mpa) | 9 | 7.1 | 5.5 | 10.4 | 11 | 12 |
| 50% modulus (Mpa) | 2.5 | 1.6 | 1.7 | 5.2 | 7 | 5.2 |
| 100% modulus (Mpa) | 4.8 | 3.1 | 3.2 | -- | -- | -- |
| Elongation (%) | 160 | 200 | 130 | 90 | 75 | 95 |
| Hardness - Shore A | 68 | 66 | 62 | 78 | 80 | 77 |

**TABLE 3**

| Expt # | 1 | 2 | 3 | 4 | 5 | 6 |
|---|---|---|---|---|---|---|
| Aged in air 168 hours at 150°C | | | | | | |
| Tensile strength (Mpa) | Brittle | 16.1 | 17.1 | 24 | 18.5 | 31.6 |
| 50% modulus (Mpa) | Brittle | 2.9 | 2.2 | 6 | 8.4 | 8 |
| Elongation (%) | Brittle | 355 | 280 | 155 | 105 | 150 |

| Aged in ASTM oil #1 168 hours at 150°C | | | | | | |
|---|---|---|---|---|---|---|
| Hardness - Shore A | 64 | 60 | 51 | 73 | 75 | 78 |
| Tensile strength (Mpa) | 5.7 | 12.8 | 14 | 14.6 | 14.5 | 23.1 |
| 50% modulus (Mpa) | 2.9 | 1.5 | 1.2 | 5.2 | 8.7 | 5.7 |
| 100% modulus (Mpa) | -- | 3.4 | 3.6 | -- | -- | 17.3 |
| Elongation (%) | 85 | 300 | 240 | 95 | 75 | 135 |
| Weight change (%) | 9 | 15 | 18 | 11 | 23 | 0 |
| Volume change (%) | 15 | 21 | 25 | 17 | 31 | -2 |

## Claims

1. A process for the vulcanization of from 10 to 50 parts by weight of ethylene-propylene-non-conjugated diene polymer combined with from 50 to 90 parts by weight of ethylene-vinyl acetate polymer to provide 100 parts by weight of polymer wherein 100 parts by weight of said polymer is mixed with 0 to 60 parts by weight of reinforcing filler, with from 0 to 15 parts by weight of zinc oxide, with from 1 to 10 parts by weight of organic peroxide and with from 5 to 35 parts by weight of zinc di-acrylate, and the mixture is heated for from 10 to 60 minutes at from 150° to 180°C to produce the vulcanizate.

2. The process of Claim 1 characterized in that the reinforcing filler is carbon black used in an amount of from 20 to 45 parts by weight, the amount of zinc oxide is from 5 to 12 parts by weight, the amount of organic peroxide is from 4 to 7 parts by weight and the amount of zinc di-acrylate is from 15 to 25 parts by weight.

3. The process of Claim 2 characterized in that said ethylene-propylene-non-conjugated diene polymer contains from 45 to 67 weight percent of ethylene and from 2 to 6 weight percent of non-conjugated diene, the balance being propylene.

4. The process of Claim 3 characterized in that the amount of ethylene-propylene-non-conjugated diene polymer is from 20 to 40 parts by weight and the amount of ethylene-vinyl acetate polymer is from 60 to 80 parts by weight for a total of 100 parts by weight.

5. The process of Claim 1 characterized in that said ethylene-vinyl acetate polymer contains from 35 to 85 weight percent of vinyl acetate, the balance being ethylene.

6. The process of Claim 2 characterized in that said ethylene-vinyl acetate polymer contains from 40 to 60 weight percent of vinyl acetate, the balance being ethylene.

7. The process of Claim 1 characterized in that the organic peroxide is added last on a cold rubber mill to the rest of the mixture.

8. Vulcanizates produced by the process of Claim 1.

## Patentansprüche

1. Verfahren zur Vulkanisation von 10 bis 50 Gewichtsteilen eines Polymers von Ethylen/Propylen/nichtkonjugiertem Dien, die mit 50 bis 90 Gewichtsteilen eines Ethylen/Vinylacetat-Polymers kombiniert werden, so daß man 100 Gewichtsteile Polymer erhält, wobei 100 Gewichtsteile des Polymers mit 0 bis 60 Gewichtsteilen eines verstärkenden Füllstoffs, 0 bis 15 Gewichtsteilen Zinkoxid, 1 bis 10 Gewichtsteilen organischem Peroxid und 5 bis 35 Gewichtsteilen Zinkdiacrylat gemischt werden und das Gemisch 10 bis 60 Minuten lang auf 150 bis 180°C erhitzt wird, so daß das Vulkanisat entsteht.

2. Verfahren gemäß Anspruch 1, dadurch gekennzeichnet, daß es sich bei dem verstärkenden Füllstoff um Ruß handelt, der in einer Menge von 20 bis 45 Gewichtsteilen verwendet wird, die Menge des Zinkoxids 5 bis 12 Gewichtsteile beträgt, die Menge des organischen Peroxids 4 bis 7 Gewichtsteile beträgt und die Menge des Zinkdiacrylats 15 bis 25 Gewichtsteile beträgt.

3. Verfahren gemäß Anspruch 2, dadurch gekennzeichnet, daß das Polymer von Ethylen/Propylen/nichtkonjugiertem Dien 45 bis 67 Gew.-% Ethylen und 2 bis 6 Gew.-% nichtkonjugiertes Dien enthält, wobei der Rest Propylen ist.

4. Verfahren gemäß Anspruch 3, dadurch gekennzeichnet, daß die Menge des Polymers von Ethylen/Propylen/nichtkonjugiertem Dien 20 bis 40 Gewichtsteile beträgt und die Menge des Ethylen/Vinylacetat-Polymers 60 bis 80 Gewichtsteile beträgt, so daß man insgesamt 100 Gewichtsteile erhält.

5. Verfahren gemäß Anspruch 1, dadurch gekennzeichnet, daß das Ethylen/Vinylacetat-Polymer 35 bis 85 Gew.-% Vinylacetat enthält, wobei der Rest Ethylen ist.

6. Verfahren gemäß Anspruch 2, dadurch gekennzeichnet, daß das Ethylen/Vinylacetat-Polymer 40 bis 60 Gew.-% Vinylacetat enthält, wobei der Rest Ethylen ist.

7. Verfahren gemäß Anspruch 1, dadurch gekennzeichnet, daß das organische Peroxid auf einer Cold-Rubber-Mühle als letztes zu dem Rest des Gemischs gegeben wird.

8. Vulkanisate, die nach dem Verfahren gemäß Anspruch 1 hergestellt sind.

## Revendications

1. Procédé pour la vulcanisation de 10 à 50 parties en poids de polymère éthylène/propylène/diène non conjugué combinées avec 50 à 90 parties en poids de polymère éthylène/acétate de vinyle pour donner 100 parties en poids de polymère, dans lequel 100 parties en poids dudit polymère sont mélangées avec 0 à 60 parties en poids de charge de renforcement, avec 0 à 15 parties en poids d'oxyde de zinc, avec 1 à 10 parties en poids de peroxyde organique et avec 5 à 35 parties en poids de diacrylate de zinc, et le mélange est chauffé pendant 10 à 60 minutes à 150 à 180°C pour produire le produit vulcanisé.

2. Procédé selon la revendication 1, caractérisé en ce que la charge de renforcement est du noir de carbone utilisé en une quantité de 20 à 45 parties en poids, la quantité d'oxyde de zinc est de 5 à 12 parties en poids, la quantité de peroxyde organique est de 4 à 7 parties en poids et la quantité de diacrylate de zinc est de 15 à 25 parties en poids.

3. Procédé selon la revendication 2, caractérisé en ce que ledit polymère éthylène/propylène/diène non conjugué contient de 45 à 67 % en poids d'éthylène et de 2 à 6 % en poids de diène non conjugué, le reste étant du propylène.

4. Procédé selon la revendication 3, caractérisé en ce que la quantité de polymère éthylène/propylène/diène non conjugué est de 20 à 40 parties en poids et la quantité de polymère éthylène/acétate de vinyle est de 60 à 80 parties en poids pour un total de 100 parties en poids.

5. Procédé selon la revendication 1, caractérisé en ce que ledit polymère éthylène/acétate de vinyle contient de 35 à 85 % en poids d'acétate de vinyle, le reste étant de l'éthylène.

6. Procédé selon la revendication 2, caractérisé en ce que ledit polymère éthylène/acétate de vinyle contient de 40 à 80 % en poids d'acétate de vinyle, le reste étant de l'éthylène.

7. Procédé selon la revendication 1, caractérisé à en ce que le peroxyde organique est ajouté en dernier sur un broyeur à caoutchouc à froid au reste du mélange.

8. Produits vulcanisés produits par le procédé de la revendication 1.
